(19) Europäisches Patentamt
European Patent Office
Office européen des brevets

(11) **EP 4 195 161 B1**

(12) **EUROPEAN PATENT SPECIFICATION**

(45) Date of publication and mention of the grant of the patent:
**21.08.2024  Bulletin 2024/34**

(21) Application number: **23156424.6**

(22) Date of filing: **13.02.2023**

(51) International Patent Classification (IPC):
**G06T 19/20** $^{(2011.01)}$      **D04B 1/00** $^{(2006.01)}$

(52) Cooperative Patent Classification (CPC):
**G06T 19/20;** G06T 2219/2021

(54) **APPARATUS AND PROCESS FOR REAL-TIME MONITORING OF DEFORMATION OF SMART ELASTIC TEXTILES BASED ON MEASUREMENTS OF ELECTROMAGNETIC CHARACTERISTICS**

VORRICHTUNG UND VERFAHREN ZUR ECHTZEIT-ÜBERWACHUNG DER VERFORMUNG VON INTELLIGENTEN ELASTISCHEN TEXTILIEN AUF DER GRUNDLAGE VON MESSUNGEN ELEKTROMAGNETISCHER EIGENSCHAFTEN

APPAREIL ET PROCÉDÉ POUR LA SURVEILLANCE EN TEMPS RÉEL DE LA DÉFORMATION DE TEXTILES ÉLASTIQUES INTELLIGENTS SUR LA BASE DE MESURES DE CARACTÉRISTIQUES ÉLECTROMAGNÉTIQUES

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority:   **16.02.2022   LU 501493**

(43) Date of publication of application:
**14.06.2023   Bulletin 2023/24**

(73) Proprietor: **Univerza v Mariboru**
**2000 Maribor (SI)**

(72) Inventors:
• **Mongus, Domen**
**2000 Maribor (SI)**
• **Vlahek, Dino**
**2000 Maribor (SI)**

(74) Representative: **Patentni Biro AF d.o.o.**
**Kotnikova 32, p.p. 2706**
**1001 Ljubljana (SI)**

(56) References cited:
• **GARCIA-GARCIA LEONARDO ET AL: "Inferring Complex Textile Shape from an Integrated Carbon Black-infused Ecoflex-based Bend and Stretch Sensor Array", PROCEEDINGS OF THE 2021 AAAI/ACM CONFERENCE ON AI, ETHICS, AND SOCIETY, ACMPUB27, NEW YORK, NY, USA, 21 September 2021 (2021-09-21), pages 298 - 303, XP058764233, ISBN: 978-1-4503-8476-6, DOI: 10.1145/3460418.3479347**
• **OLIVER GLAUSER ET AL: "Deformation Capture via Soft and Stretchable Sensor Arrays", ARXIV.ORG, CORNELL UNIVERSITY LIBRARY, 201 OLIN LIBRARY CORNELL UNIVERSITY ITHACA, NY 14853, 11 April 2018 (2018-04-11), XP081127951, DOI: 10.1145/3311972**
• **PATRICK PARZER ET AL: "SmartSleeve : Real-time Sensing of Surface and Deformation Gestures on Flexible, Interactive Textiles, using a Hybrid Gesture Detection Pipeline", PROCEEDINGS OF THE 30TH ANNUAL ACM SYMPOSIUM ON USER INTERFACE SOFTWARE AND TECHNOLOGY , UIST '17, 1 January 2017 (2017-01-01), New York, New York, USA, pages 565 - 577, XP055559021, ISBN: 978-1-4503-4981-9, DOI: 10.1145/3126594.3126652**

EP 4 195 161 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Field of the invention**

The present invention belongs to measuring and computing, having important applications in medicine, telecommunication, electronics and household appliances. The invention relates to an apparatus and a process for real-time monitoring of deformation of smart elastic textiles based on measurements of electromagnetic characteristics.

**Background of the invention and the technical problem**

Smart textiles are sensor systems capable of sensing, responding and adapting to different environmental stimuli such as electrical, thermal, chemical or physical, Usually, smart textiles comprise a textile basis, inside which conductive fibres are weaved, together with connecting elements, sensors and other electrical components, which enable measurements of electromagnetic characteristics of the textile.

The textile basis is normally made from polyester (as described in patent applications US4715235A and WO2009051411), naylon (as described in patent US10119208 and in patent application WO2009051411), cotton, silk wool or rubber (as described in patent US10119208). Into the textile basis conductive components from different materials are printed, weaved or interlaced, wherein said conductive materials may be steel (as described in patent US10987052) or silver (described in patent US10119208), polyaniline (as described in patent US9271665), polypyrrole (as described in patent US10119208(B2) and in patent application US20200163621), carbon (as described in patent US10987052) or copper (as described in patent US10987052).

According to documents US10602965, US20150370320, US4715235A and Ammari, H. et al. (arXiv:1409.3650) conductive components enable measurement of electromagnetic characteristic of textiles, such as resistance, voltage, conductivity or capacity. In order to recognize deformation, known solutions concentrate on derivation of physical values from electromagnetic characteristics, for example measurement of pressure applied to them (patent US7365031 and Jingyuan Cheng, et al. (doi: 10.1016/j.pmcj.2016.01.007), while until today a full 3D reconstruction of the shape has not been made.

Smart textiles are used in medical diagnostics and rehabilitation, in sport, protection and safety, as well as in entertainment industry, therefore a 3D reconstruction of its shape represents a key advantage and further expands the possibilities of use. Namely, it allows for simultaneously analysing textile bending and stretching, which is difficult to achieve in 2D, while it also enables 3D representation for improved visual data interpretation. The technical problem, which is thus solved by the present invention, is monitoring of surface deformation based on measurement of electromagnetic characteristics of conductive fibres embedded in smart elastic textiles. The aim of the invention is to provide a real-time 3D reconstruction method based on measurements of said electromagnetic characteristics of smart textiles.

**State of the art**

Patent application US20150370320 describes a textile comprising conductive fibres and integrated electromagnetic sensors. The clothing made from the said textile enables conversion of user's movements and gesticulations into computer inputs. The electromagnetic sensor, comprising of a network of electro-conductive fibres, collects data about voltage, conductivity, resistance, capacity and impedance of electromagnetic energy, which is translated through the smart clothing. From these measurements, conducted at the intersections of the conductive fibres, i.e. measuring points, calculations of the bending angles are achieved based on the ratios between them. These can be used as a human-computer interaction system or a system for measuring human physical activities, thus, enabling multiple applications in entertainment and medicine industries.

Rofouei et al. (2010) in their article "Computing with uncertainty in a smart textile surface for object recognition," 2010 IEEE Conference on Multisensor Fusion and Integration, disclose a system for recognizing objects on the surface of a smart textile based on measurements of surface deformation. The smart textile comprises an elastic basis with a sensory matrix. Each sensor is made of an elastic textile with a sewn-in conductive fibre, the resistance of which is mapped into the estimation of applied pressure at a given point. The resulting rasterised heat-map of applied pressure allows for recognition of objects placed on the textile. Latter is achieved by edge-detection and image binarization with predefined threshold, which is then compared with reference images in the database.

A similar system for sensing objects or activities on the basis of surface deformation was described by Cheng et al (2016; doi: 10.1016/j.pmcj.2016.01.007). Here, pressure heat-map was constructed by a $N \times M$ matrix of conductible fibres with electrical resistance sensors, sewn-in an elastic textile. Object, activity, and hand gesture recognition can then be achieved by using feature extraction and applying different types of classifiers.

Patent US9271665 discloses a system for tracking a sitting position of an individual (e.g. in a car seat) from the assessment of pressure based deformation of a smart textile. A NxM matrix of conductive threads is sewed into a textile basis, wherein resistance sensors are placed at the intersections of said threads. By estimating the electrical resistance, a time-series of heat-maps is created and compared to the reference images in order to analyse surface deformation using dynamic time-warping.

Patent application US20160262687 describes a smart textile, which comprises an accelerometer, a gyroscope, a barometer and bioacoustics sensors for biomechanical activity monitoring. Based on sensory measurements, the presented process allows for determining movements or postures. The captured data from the sensors are in the form of time series and are first processed with a window function. The obtained samples are then divided into classes using a clustering method. Statistical characteristics, such as averages, squares averages, standard deviations and covariances of amplitude values are then extracted from the window samples of the accelerometer and bio-acoustic sensors, while data from the barometer are presented in the form of a gradient image. Based on the acquired characteristics, a classifier than determines various movements or postures with an accuracy of 95-100%, which can be used in medicine and sports for the purposes of rehabilitation, diagnostics, or to determine a user's physical performance.

Patent application US20150148619 describes a wearable smart textile for tracking biometric parameters, which are a result of physical activity, by using a set of different electrical devices, including electrodes for monitoring electromyography and galvanic skin response, sensors for monitoring temperature, vibrations, angles and cardiovascular parameters, acetometer, and gyroscope. Assessment of different parameters of physical activities, such as types of cardio exercise, their length, or the correctness of their execution, can then be achieved by fusion and analytics of this measurements.

Thus, all the processes and apparatuses described above deal with the assessment of textile bending due to the applied external forces, while they do not allow for recognising the textile stretching. They are, therefore, more subjected to errors and limited in their applications, while being also incapable of providing a realistic visual interpretation of causes behind the textile deformation. Latter is of particular importance when addressing medical applications.

Medical data obtained from wearable devices are used for rehabilitation and diagnostics or in optimization of trainings, injury prevention and tracking of injured athletes. For example, Vu and Kin (2017; doi: 10.1007/s12221-017-7042-x) describe a stretchable textile that can be used for tracking human activity. Here, measurements of electrical conductivity of fibres were enabled by applying a carbon dust ink onto a textile basis. A mapping of resistance measurement into a real stretch of the textile has then been achieved based on a predefined stretching factor, given by the relative change in resistance and pre-measured change of the stretch. However, it does not address measuring of textile bending.

A system for explicitly determining textile deformations (such as bending, pushing, rotation, folding, stretching, and twisting), was described by Parzer et al (2017; ("SmartSleeve: Real-time Sensing of Surface and Deformation Gestures on Flexible, Interactive Textiles, using a Hybrid Gesture Detection Pipeline". In Proceedings of the 30th Annual ACM Symposium on User Interface Software and Technology (UIST '17). The smart textile consisted of three layers, two outer non-conductive layers between which an intermediate layer interweaved with 24 horizontal conductive circuits and 15 vertical conductive circuits was provided. 360 sensors for measuring resistance of conductive circuits were installed at the intersections. From the raw measurements of resistance, a 24x15px heat-map of applied pressures was calculated, while before mentioned textile deformations were estimated by applying feature extraction, together with pre-learned classifier. Thus, the disclosed process enables recognition of applied deformations, however, it does not provide proper analytics capacities for estimating their intensity, nor enabling their visualisation.

Liu, Su et al. (2016) in their article "Smart E-textile: Resistance properties of conductive knitted fabric - Single pique", Textile Research Journal, disclosed a visual textile simulator that allows for assessing aesthetical aspects of wearable electrics. The process is fitted to mimic the resistance properties of conductive fabrics with a knitted structure and tuck stitches, which is typical for knitting. Here, a planar geometric model is established for each pique structure based on the loop construction of the knitted fabric. Subsequently, resistive network models were developed for different cases of external voltages to calculate the resistance values of single pique fabrics with different numbers of wales and courses. On the other hand, a system and a process for simulating deformation of a material in a virtual environment was disclosed in patent application EP2595074. The system comprises a processor, configured to create a virtual representation of physical interaction with the material, a virtual model of the material, and a flow of data representing the physical interaction.

The latter is achieved with a touchscreen arranged to show virtual material and a sensory system that enables tracking of the physical interaction (for example, by moving a hand on the screen). This allows a real-time representation of virtual interaction with a material, including textile deformation, however, only of a virtual model and not of a real smart elastic textile. Patent application US 2020/0166989 describes a system that instead of simulated textile, transfers the deformation onto a real textile and uses this for communication with a remote user, for example a person driving a car. While all of these processes and apparatuses allow for simulating deformations of virtual textiles on input devices (either visual or textile base), they do not allow for assessing the deformation of the real textile.

Glauser et al., (2019; doi: 10.1145/3311972) proposed a hardware and software pipeline to fabricate flexible wearable sensors and use them to capture deformations without line-of-sight. Multiple aligned conductive layers with complex geometries were embedded into silicone compounds. Overlapping conductive areas from separate layers form local capacitors that measure dense area changes. While area measurements alone are not enough to reconstruct the full 3D deformation of a surface, they become sufficient when paired with a data-driven prior. The authors provided a novel semi-automatic tracking algorithm, based on an elastic surface geometry deformation, that allows to capture ground-truth data with an optical mocap system, even under heavy occlusions or partially unobservable markers. The resulting dataset is used to train a regressor based on deep neural networks, directly mapping the area readings to global positions of surface vertices. This solution differs from the present invention.

Garcia-Garcia et al. (2021, doi: 10.1145/3460418.3479347) demonstrated integration of an array of custom-made strain and bend sensors into a stretchable sleeve to infer the textile deformation. The angles and elongation measured by the sensors were used by an optimisation-based algorithm to infer the textile geometrical model by minimising a loss function. This algorithm method generates two geometries, a target geometry and an inference geometry. The former has a fixed topology which is the digital representation of the array of sensors, given the reading of the sleeve's sensors after conforming onto a physical body. The topology of the latter starts as a cylinder and later iterates to match the target geometry. The geometry is thus restricted to the cylinder shape because the algorithm uses three parameters in the simulation, the edges' lengths, obtained from the sensors' strain, and two different sets of angles (the angles between segments on the geometry's cross section, and the angles between segments connecting each cross section along the geometries' length) that are measured with bend sensors.

All above-mentioned solutions differ from the present invention.

Summary of the invention:

The present invention is defined by the appended independent claims.

In comparison to the disclosure by Garcia Garcia et al, the present invention aims for reconstruction of flat surfaces, which is particularly important as it allows for numerous additional applications as for example monitoring of in entertainment as a human-computer interface or for scanning the objects, and in engineering for assessment of textile properties or any other possible uses of smart textiles in addition to tensiomyography. The technical problem is solved as defined in the appended claims. The purpose of the invention is a real-time reconstruction of the textile surface after its deformation from measurements of the changes in electromagnetic characteristics of conductive fibres of elastic textiles. Smart textiles that may be analysed with the present invention have a textile base with conductive fibres and connecting elements, sensors or any other electronic component that enable measurement of electromagnetic characteristics, such as electrical current, voltage, or resistance, wherein the conductive fibres form a pre-defined sensory network. The topology of the network is defined by conductive fibres, while the intersections of the fibres represent measurement points (nodes) at which electromagnetic characteristics are measured. During stretching and shrinking of the textile, these characteristics change, which is exploited by the present invention to reconstruct the deformation geometry of the analysed textile in 3D.

The apparatus for real-time monitoring of deformation of smart elastic textiles based on measurements of electromagnetic characteristics according to the invention comprises:

- at least one suitable connection, for example via connectors, wireless, database, or appropriately designed application interfaces - APIs, arranged for connecting the apparatus with sensors and/or conductive fibres in the analysed smart textile,
- a suitable internal memory, preferably random-access memory, arranged to perform the following processes:

    o storing schematic 3D model of the smart textile and
    o storing data transformation coefficient,

- a suitably programmed processor arranged to perform at least the following processes:

    ○ aligning measurement points and its topology with a schematic 3D model before measurement,
    ○ receiving measured electromagnetic characteristics from the sensors and/or conductive fibres,
    ○ processing measured electromagnetic characteristics in order to transform them into distances between the measurement points of the conductive fibres,
    ○ performing iterative calculation for reconstructing the 3D model of the deformation,
    ○ optionally visualization of the measured results or deformed schematic 3D textile model,

- optionally, a suitable display for displaying at least measured results or 3D model of deformation of the smart textile.

The apparatus may be any computer arranged to perform the above-mentioned tasks or a dedicated device, which is independent from the programming language or the principles of machine implementation.

The process for real-time monitoring of deformation of smart elastic textiles performed with the above-described apparatus comprises the following steps:

a) aligning measurement points and the corresponding topology of the sensory network of the smart textile with a schematic 3D model stored in the memory of the apparatus,

b) measuring electromagnetic characteristics, such as electric current, conductivity, resistance, voltage, etc., in each of the measuring points,

c) transforming the measured electromagnetic characteristics into distances between measurement points,

d) optionally, calibration of the mapping functions that transforms measured electromagnetic characteristic into distance between points, wherein calibration function may be defined experimentally or based on information provided by the smart textile manufacturer,

e) updating the position of the vertices of schematic 3D model of the smart textile, thus, reconstructing its deformation by solving a system of equations that transforms said distances into coordinates of the vertices of the 3D model,

f) iterative total reconstruction error minimisation to solve the system of equations obtained in previous step, achieved by adjusting the lengths of the edges by scaling it from the centre point between vertices of the schematic 3D model, thus, moving the vertices closer or further apart from centre point direction in a stepwise manner in order to mimic stretching or shrinking or bending of smart elastic textile, wherein the adjustment of the lengths of edges are such that the edge lengths are made equal to the distance between the corresponding measurement nodes;

g) stepwise reconstruction error minimisation achieved in each iteration by randomly selecting a starting edge of the schematic 3D model for length adjustment and then propagating the adjustments to its neighbours and the neighbours' neighbours until the lengths of all the edges are revised,

h) calculation of the total reconstruction error as a root-mean-square error of the distances between vertices of the schematic 3D model and the corresponding distances between measuring points or, alternatively, using any other type of error assessment, as for example mean absolute error, mean absolute percentage error, or symmetric mean absolute percentage error.

i) checking the threshold in order to determine whether the total reconstruction error of the schematic 3D model is final or iterative calculation has to be continued, wherein the said threshold is given by the maximal allowed total reconstruction error or, alternatively, any other stopping criterion may be used, as for example number of iterative steps or maximal allowed time for iterative calculation.

j) if the threshold has been reached, the solution of the system of equations defines coordinates of the 3D model of the smart textile after its deformation,

k) optionally visualization of the schematic 3D model of smart textile with any suitable software or hardware that allows rendering of 3D objects in boundary representation.

Upon further deformation of the smart textile, these steps may be repeated and a real-time continuous representation of smart textile deformation is obtained.

The preferred threshold is the error, so that the step h) is carried out by a comparison of the reconstruction error $\varepsilon_k$ with the maximal allowed error $\varepsilon_d$. In case $\varepsilon_k$ is larger than $\varepsilon_d$, further iteration is performed, while in case $\varepsilon_k$ is smaller or equal to $\varepsilon_d$, reconstruction is finished, and the resulting vertex coordinates of schematic 3D model represent the result of the reconstruction.

The main advantage of the present invention is efficient interpretation of measurements of electromagnetic characteristics of smart textiles, which reliably reflects its geometrical transformations. The present invention is useful in several different fields, especially in medicine for measurements of tensiomyography in rehabilitation or injury prevention, in entertainment as a human-computer interface or for scanning the objects, and in engineering for assessment of textile properties or any other possible uses of smart textiles. With the apparatus and the process, implemented according to the invention, 3D reconstruction and monitoring of changes in the shape of the surface of smart elastic textiles is enabled in real-time, which allows for computer-assisted analysis of the forces that affect the deformation. The latter can represent muscle activity (when the textile is designed in the form of a brace), gravity for reconstructing the surface of other objects (when the textile is placed on the object), analysis of object movements (when objects are placed on the textile), and analysis of forces stretching or contracting the textile (when textiles are fixed between moving objects).

The apparatus and the process for real-time monitoring of deformation of smart elastic textiles based on measurements of electromagnetic characteristics will be described in further detail based on exemplary embodiments and figures, which show:

Figure 1: Schematic model of smart elastic textiles
Figure 2: Flowchart of the process for real-time monitoring of smart elastic textiles deformations based on measurements of electromagnetic characteristics

Figure 3:     A possible embodiment of smart elastic textile sensor mesh topology

Figure 4:     An example of the convergence of the reconstruction error $\varepsilon_k$ with increasing number of iterations towards 0.

Figure 5:     Visualization of the input (left) and deformed textiles Plane (right)

Figure 6:     Visualization of the input (left) and deformed textiles Cylinder 1 (right)

Figure 7:     Visualization of the input (left) and deformed textiles Cylinder 2 (right)

Figure 8:     Visualization of the input (left) and deformed textiles Cylinder 3 (right)

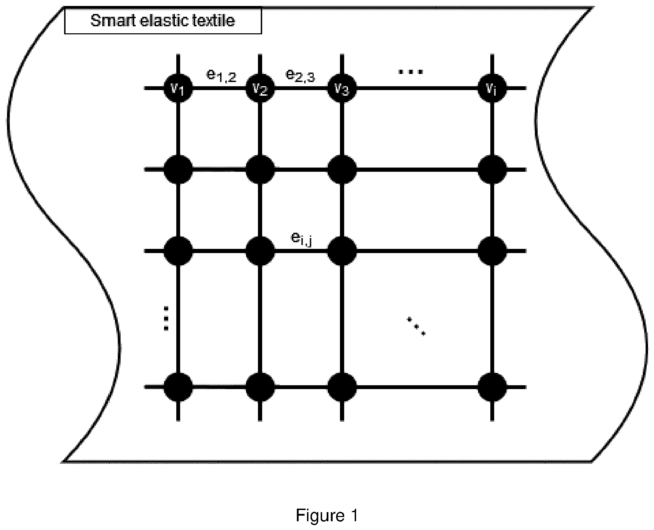

Figure 1 shows the conceptual design of a generic elastic smart textile comprising an elastic base material and a sensory mesh. The topology of the latter is formed by conductive fibres, where the intersections (nodes) between the fibres define measuring points at which measurements of their electromagnetic characteristics are performed. Due to stretching and shrinkage of fibres, these change over time, which is used by the invention to reconstruct 3D geometric deformations of the textile.

Formally, a schematic model of smart elastic textiles is, in time $t$, defined by the set of vertices $V = \{v_i\}$ and the corresponding set of edges between them $E = \{e_{i,j}\}$. A vertex $v_i$ corresponds to the measuring point of the sensor mesh with the index $i \in [1, I]$, where edges $e_{i,j} = (v_i, v_j)$ correspond to the topology of conductive fibres bounded by a pairs of measuring vertices $v_i, v_j \in V$. The default topology of smart elastic textiles is defined in advance, according to the type of selected sensor mesh, and does not change during the operation of the system. The physical distance between the measuring points and the corresponding vertices $v_i$ in $v_j$ (length of the conductive fibre in the relaxed state) is denoted by $D_0(e_{i,j})$, while their initial positions are determined by the coordinates triple $\vec{C}_t(v_i) = [x_t(v_i), y_t(v_i), z_t(v_i)]$.

The electromagnetic characteristic of the conductive fibre that corresponds to the edge $e_{i,j}$, which change in time t according to the applied deformation, is denoted by the property $P_t(e_{i,j})$.

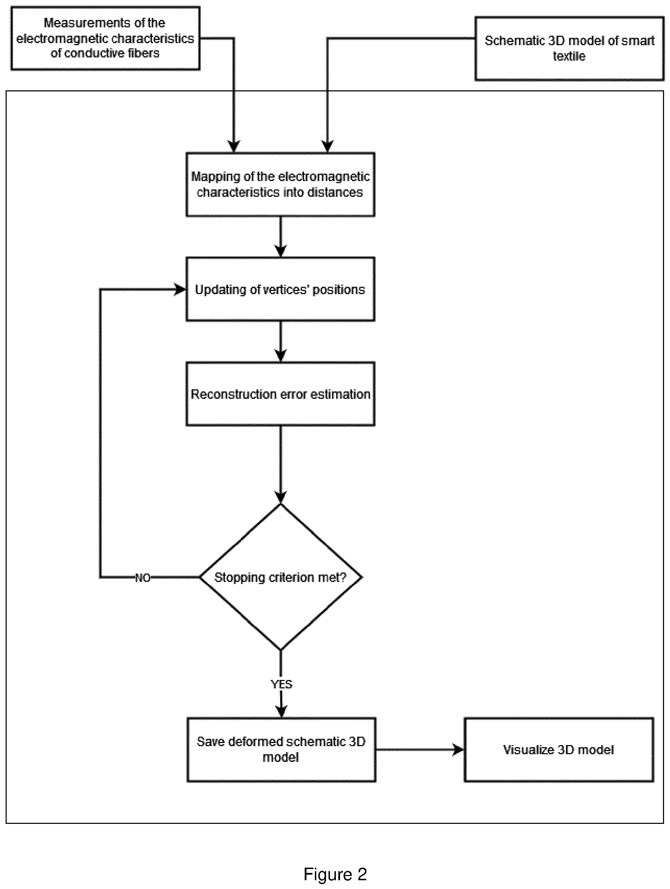

Figure 2 shows a flowchart of a possible embodiment of the smart textile geometric deformation monitoring system. In the initialization step, the measuring points of the smart elastic textile and the corresponding topology of the sensor mesh is aligned with its schematic 3D model, maintained in the internal memory of the device. In continuation, the following steps are described in detail:

1) The first step of the invention is "Mapping of the electromagnetic characteristic into distances", where physical distances between the measuring points are estimated from the measurements of the electromagnetic characteristics of the conductive fibres. This is defined by the mapping function $m: \mathbb{R} \to \mathbb{R}$, that maps the input electromagnetic characteristic of the conductive fibre $P(e_{i,j})$ between the measuring points that correspond to $v_i$ and $v_j$ into the physical distance between them $D(e_{i,j})$. Formally,

$$D(e_{i,j}) = m\left(P(e_{i,j})\right).$$

The mapping function $m(P(e_{i,j}))$, thus, describes a nonlinear relationship between the change in the electromagnetic characteristic of a conductive fibre in relation to the change in its physical length (expansion and contraction). This nonlinear relationship depends on the structure and the type of the fibre and is determined by the manufacturer. The method and apparatus, according to the invention, also allows for a calibration step, where the mapping function $m(P(e_{i,j}))$ is determined experimentally. This is done by sampling the electromagnetic characteristic of the conductive fibres $P_k(e_{i,j})$ at their different lengths $D_k(e_{i,j})$, where $k \in [1, K]$ denotes an index of the measured sample in the set of sample lengths $D$, and $K = |E_k(e_{i,j})|$ defines the sample size. The mapping function m is determined by linear regression, as:

$$D_k = E_k \beta + \varepsilon,$$

where $\beta$ denotes the coefficients of the mapping function $m$ given in the form of a polynomial of arbitrary degree (as follows from experiments, a polynomial of the second degree is usually sufficient to describe the characteristics of most textiles), while $\varepsilon$ denotes a mapping error. The definition of the mapping function $m$ is, thus, performed by minimizing the total error $\varepsilon$ using the least squares method. Since the latter is a well-known approach to solving similar problems, it is not described in detail here. Furthermore, if the mapping function is already known, the calibration is omitted, while the length of the conductive fibre and the corresponding value of the electromagnetic characteristic in the initial relaxed state $t = 0$ are denoted as $D_0(e_{i,j})$ and $P_0(e_{i,j})$, accordingly. Coordinates of the vertices corresponding to the measuring points are denoted by $\vec{C}_0(v_i)$. The defined mapping function $D_d(e_{i,j}) = m$ $(E_d(e_{i,j}))$, thus, allows for direct conversion of the measured electromagnetic characteristic $P_d(e_{i,j})$ into the lenght $D_d(e_{i,j})$ of the fibre $e_{i,j}$ between the measuring points $v_i$ and $v_j$ after any given deformation d.

2) In the second step of the invention, "Updating positions of vertices" is performed, where the initial positions of vertices correspondent the measuring points $\vec{C}_0(v_i)$ and $\vec{C}_0(v_j)$ and the measured distances between the them $D_d(e_{i,j})$ are used to estimate positions of the points $\vec{C}_d(v_i)$ and $\vec{C}_d(v_j)$ after the textile deformation d, by which its reconstructs is achieved. Since the presented system does not have a uniform solution, the solution is calculated iteratively, by minimizing the square of the total error of the measured distances. Starting from the assumption that the conductive elastic fibres stretch or contract or bend, the points $p_i$ and $p_j$ can only come closer or move away from each other. In $k$-ti iteration (where $k = 0$ denotes the initial state, $k = 1$ first iteration, $k + 1$ next iteration and $k = d$ the desired final state) of this iterative reconstruction process, we randomly select the edge (conductive fibre) $e_{i,j} \in E$, from which the propagation of changes in distances between points begins. A new position of vertices $\vec{C}_{k+1}(v_i)$ in $\vec{C}_{k+1}(v_j)$ is calculated as:

a) If the new measured distance $D_d(e_{i,j})$ is greater than the actual measured distance between two points

$$\sqrt{\left(\vec{C}_k(v_i) - \vec{C}_k(v_j)\right)^2} \ :$$

$$\vec{C}_{k+1}(v_i) = \vec{C}_k(v_i) - \frac{\left| D_d(e_{i,j}) - \sqrt{\left(\vec{C}_k(v_i) - \vec{C}_k(v_j)\right)^2} \right|}{2},$$

$$\vec{C}_{k+1}(v_j) = \vec{C}_k(v_j) + \frac{\left| D_d(e_{i,j}) - \sqrt{\left(\vec{C}_k(v_i) - \vec{C}_k(v_j)\right)^2} \right|}{2}.$$

b) If the distance $D_d(e_{i,j})$ is smaller than the actual distance between two points $\sqrt{\left(\vec{C}_k(v_i) - \vec{C}_k(v_j)\right)^2}$ :

$$\vec{C}_{k+1}(v_i) = \vec{C}_k(v_i) + \frac{\left| D_d(e_{i,j}) - \sqrt{\left(\vec{C}_k(v_i) - \vec{C}_k(v_j)\right)^2} \right|}{2},$$

$$\vec{C}_{k+1}(v_j) = \vec{C}_k(v_j) - \frac{\left| D_d(e_{i,j}) - \sqrt{\left(\vec{C}_k(v_i) - \vec{C}_k(v_j)\right)^2} \right|}{2}.$$

Following the same procedure, we continue the propagation by updating the lengths of adjacent edges $\{e_{i,n}\}$ and $\{e_{j,m}\}$, where $e_{i,n}$, $e_{j,m} \in E$, until we update the lengths of all edges in $E$. As it follows from the equations above, updating the lengths of edges $D_k(e_{i,n})$ and $D_k(e_{j,m})$ changes the length of the already updated edge $D_k(e_{i,j})$ in step $k$. This type of propagation, thus, inevitably results in a reconstruction error, which is reflected in the mismatching of most of the lengths of the updated edge $D_k(e_{i,j})$ with the actual measurements $D_d(e_{i,j})$, estimated from the electromagnetic characteristic of the conductive fibre $P_d(e_{i,j})$.

3) In order to assess the accuracy of the current iteration, »Reconstruction error estimation« is performed, preferably using the root-mean-square error metric. The reconstruction error $\varepsilon_k$ of the iteration $k$ is formally defined as:

$$\varepsilon_k = \sqrt{\frac{\sum_{i,j,i\neq j}^{N}\left(D_d(e_{i,j}) - \sqrt{\left(\vec{C}_k(v_i) - \vec{C}_k(v_j)\right)^2}\right)^2}{N}}$$

4) In the last step of the iteration, the stopping condition of the procedure is checked by comparing the estimated reconstruction error $\varepsilon_k$ with the maximum allowed error threshold $\varepsilon_d$. In case that the error $\varepsilon_k$ is greater that $\varepsilon_d$, the iteration, as described in the previous steps, is repeated. In contrast, when $\varepsilon_k$ is smaller than $\varepsilon_d$, the reconstruction process is stopped and the obtained coordinates of the points $\{\vec{C}_k(v_i)\}$ are returned at the output as the result of the reconstruction, thus,

$$\{\vec{C}_d(v_i)\} = \{\vec{C}_k(v_j)\}.$$

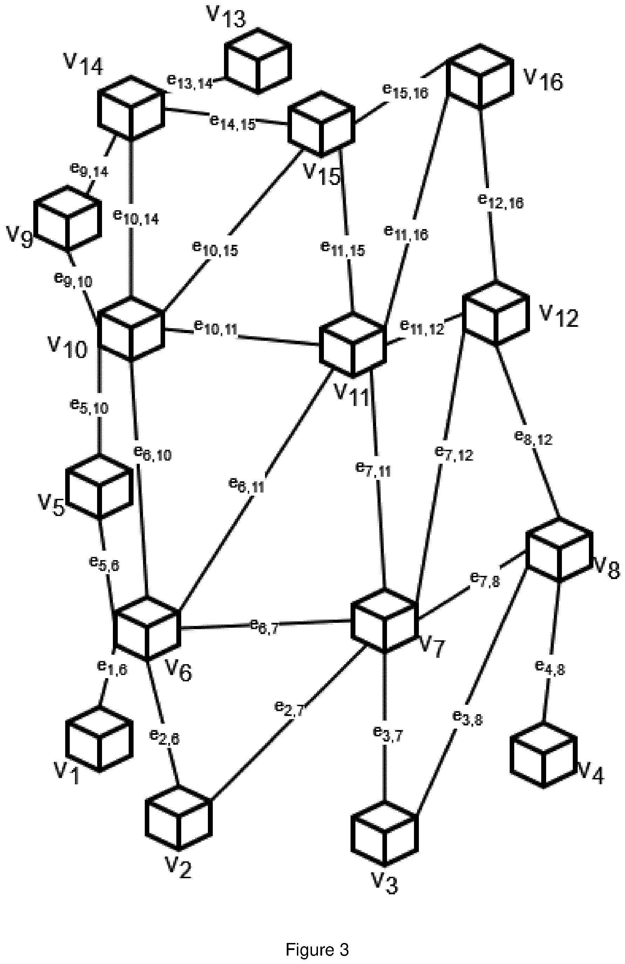

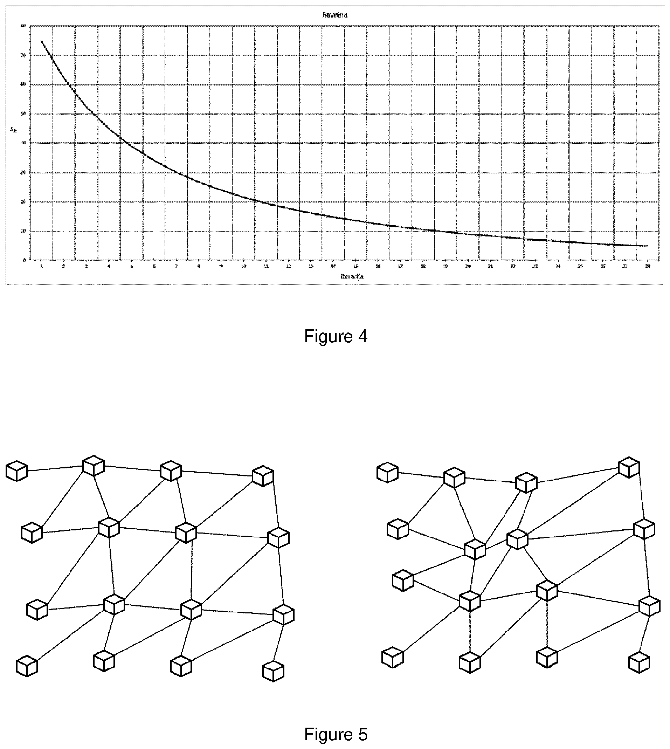

The set $V = \{v_i\}$ and the corresponding coordinates $\vec{C}_d(v_i)$, where $v_i \in V$, together with the set of edges $E$, form a reconstructed 3D model of smart elastic textile after its deformation, as shown in Figure 3, are stored. Visualization of stored 3D positions and corresponding topology can then be achieved using any software or hardware that allows for the rendering of 3D models, as shown in Figure 5.

EXPERIMENTS

Experimental validation of the described invention was conducted from numerical as well as visual point of view. Numerical validation includes reconstruction error assessment, measured in terms of root-mean-square differences in distances between measuring points of the smart textile and the corresponding vertices of the schematic 3D model. A gradual, yet constant, decrease of measured error, achieved during the increasing number of interactions, proves the convergence of the geometric properties of the schematic 3D model towards the geometry of the deformed smart textile. While this proves a successful solution to the underlying system of equations is always found, it does not guarantee that there are no other possible solutions and that the obtained one indeed reflects the actual textile deformation. Visual validation was, therefore, additionally performed on linear (planar) as well as curved (cylindric) textiles, while performing different types of deformations. These are defined in Table 1:

Table 1: Overview of performed experiments

| Deformation | Shape of the textile | No. Of measurement points | Description of the deformation |
|---|---|---|---|
| Plane | The textile is placed flat on a flat surface (working surface) | 16 | The smart elastic textile was placed flat on a surface and pressed in one point |
| Cylinder 1 | The textile is wound around a cylindrical model (arm) | 16 | The smart elastic textile was shaped into a cylinder and pressed in one point |
| Cylinders | The textile is wound around a cylindrical model (arm) | 16 | The smart elastic textile was shaped into a cylinder and stretched in one point |
| Cylinder 3 | The textile is wound around a cylindrical model (arm) | 16 | The smart elastic textile was shaped into a cylinder and then shrinked in one point |

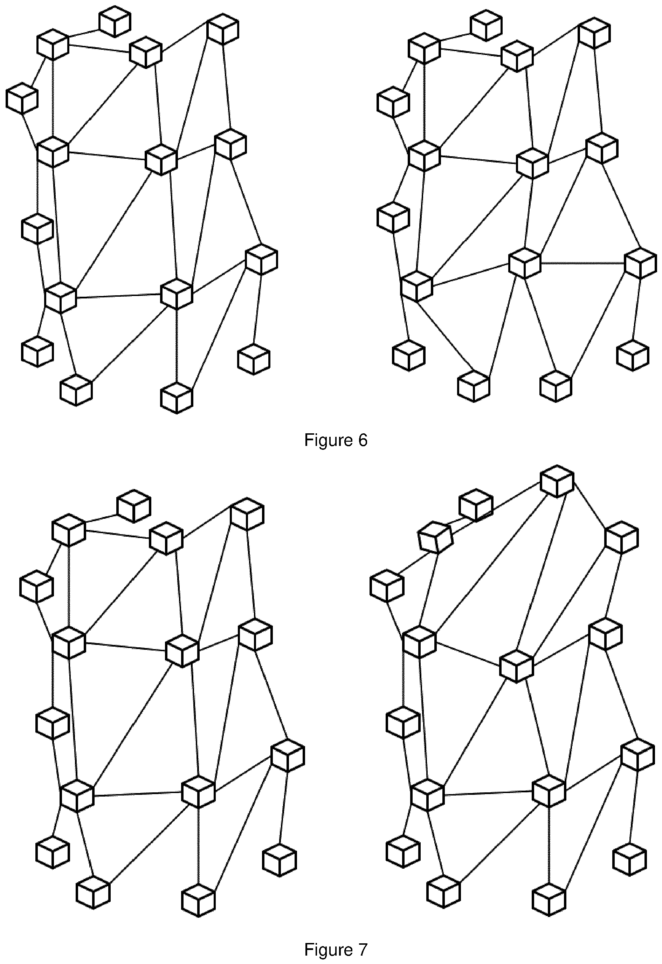

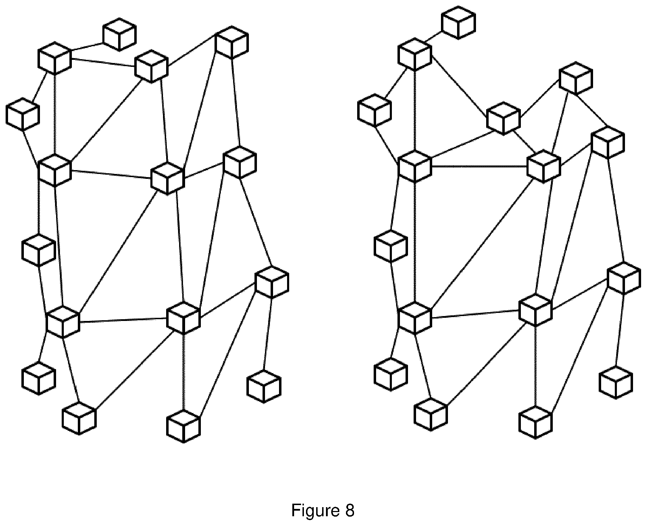

The presented experiments were performed on Intel Core™ i5 CPU with 16GB of main memory and Windows 10 operating system. Measured total root-mean-square error is given by $\varepsilon_k$, where $k$ denotes the index of the iteration in which the corresponding error was measured. Table 1 shows average number of iterations $\overline{k}$ and the corresponding average processing time $\overline{t}$ in milliseconds need to estimate the reconstruction under different stopping criterion, i.e. maximal allowed total error thresholds $\varepsilon_d$. As follows from the results, lower threshold value requires higher number of iterations and, consequently, more processing time. However, no more than 0.3 ms was measured in any of the cases, allowing for the estimation of over 3000 frames per second, thus, meeting the criterion for real-time monitoring. Furthermore, Figure 4 shows exponential convergence of the error towards 0 in all the cases, indicating that further improvements in accuracy require increasingly more time. Accordingly, the correctness of visual interpretation of textile deformation under a given error levels requires validation. Latter is shown in Figures 5 to 8, where schematic 3D models of textiles are visualized in their relaxed state (left) and after applying reported types of deformations (right), described in Table 1. Here, visualisations clearly reflect the actual deformations applied to the smart textiles, thus, ensuring correctness of visual interpretation.

Table 2: Average number of iterations $\overline{k}$ and average reconstruction times $\overline{t}$ needed for meeting stopping criterion, given by the maximal allowed reconstruction error $\varepsilon_d$.

| | $\varepsilon_d$ = 20 $mm$ | | $\varepsilon_d$ = 15 $mm$ | | $\varepsilon_d$ = 10 $mm$ | | $\varepsilon_d$ = 5 $mm$ | |
|---|---|---|---|---|---|---|---|---|
| Deformation | $\overline{k}$ | $\overline{t}[ms]$ | $\overline{k}$ | $\overline{t}[ms]$ | $\overline{k}$ | $\overline{t}[ms]$ | $\overline{k}$ | $\overline{t}[ms]$ |
| Plane | 11 | 0,111 | 14 | 0,127 | 19 | 0,161 | 28 | 0,226 |
| Cylinder 1 | 12 | 0,106 | 15 | 0,129 | 21 | 0,168 | 30 | 0,204 |
| Cylinder 2 | 11 | 0,104 | 15 | 0,121 | 20 | 0,152 | 30 | 0,206 |
| Cylinder 3 | 12 | 0,121 | 16 | 0,158 | 21 | 0,194 | 30 | 0,267 |

**Claims**

1. An apparatus for real-time monitoring of deformation of a smart elastic textile based on measurements of electromagnetic characteristics of conductive fibres of the elastic textile, wherein a schematic model of the smart elastic textile is, in time $t$, defined by the set of vertices $V = \{v_i\}$ and the corresponding set of edges between them $E = \{e_{i,j}\}$, and wherein a vertex $v_i$ corresponds to a measuring point of a sensor mesh with an index $i \in [1, I]$, where edges $e_{i,j} = (v_i, v_j)$ correspond to the topology of conductive fibres bounded by a pairs of measuring vertices $v_i, v_j \in V$, **characterized in that** the apparatus comprises:

   - at least one suitable connection arranged for connecting the apparatus with sensors and/or conductive fibres in the analysed smart textile,
   - a suitable internal memory, preferably random-access memory, arranged to perform the following processes:

     ◦ storing a schematic 3D model of the smart textile, wherein its topology is defined by conductive fibres, while the intersections of the fibres represent measurement points (nodes) at which electromagnetic characteristics are measured, and
     ◦ storing data transformation coefficient,

   - a suitably programmed processor arranged to perform at least the following steps:

     ◦ aligning measurement points and the corresponding topology of the sensory network of the smart textile with the schematic 3D model stored in the memory of the apparatus,
     ◦ receiving measured electromagnetic characteristics from the sensors and/or conductive fibres,
     ◦ transforming the measured electromagnetic characteristics into distances between measurement points, i.e. mapping,
     ◦ updating the position of the vertices of schematic 3D model of the smart textile, thus reconstructing its deformation by solving a system of equations that transforms said distances into coordinates of the vertices of the 3D model,
     ◦ iterative total reconstruction error minimisation to solve the system of equations obtained in previous step, achieved by adjusting the lengths of the edges by scaling it from a centre point between vertices of the schematic 3D model, thus, moving the vertices closer or further apart from centre point direction in a stepwise manner in order to mimic stretching or shrinking or bending of smart elastic textile, wherein the adjustment of the lengths of edges are such that the edge lengths are made equal to the distance between the corresponding measurement nodes,
     ◦ stepwise reconstruction error minimisation achieved in each iteration by randomly selecting a starting edge of the schematic 3D model for length adjustment and then propagating the adjustments to its neighbours and the neighbours' neighbours until the lengths of all the edges are revised
     ◦ calculation of the total reconstruction error as a root-mean-square error of the distances between vertices of the schematic 3D model and the corresponding distances between measuring points or, alternatively, using any other type of error assessment, as for example mean absolute error, mean absolute percentage error, or symmetric mean absolute percentage error, wherein this calculation is performed after every iteration,

∘ checking the threshold in order to determine whether the total reconstruction error of the schematic 3D model is final or iterative calculation has to be continued, wherein the said threshold is given by the maximal allowed total reconstruction error or, alternatively, any other stopping criterion may be used, as for example number of iterative steps or maximal allowed time for iterative calculation, and

∘ if the threshold has been reached, the solution of the system of equations defines coordinates of the 3D model of the smart textile after its deformation.

2. The apparatus according to claim 1, **characterized in that** the processor is further arranged to perform the visualization of the measured results or deformed schematic 3D textile model.

3. The apparatus according to claim 1 or claim 2, **characterized in that** it further comprises a suitable display for displaying at least measured results or 3D model of deformation of the smart textile.

4. The apparatus according to any of the preceding claims, **characterized in that** the suitable connection is ensured via connectors, wireless, database, or appropriately designed application interfaces - APIs.

5. The apparatus according to any of the preceding claims, **characterized in that** the measured electromagnetic characteristics are electrical current, voltage, or resistance.

6. The apparatus according to any of the preceding claims, **characterized in that** it is a computer arranged to perform the above-mentioned tasks or a dedicated device, which is independent from the programming language or the principles of machine implementation.

7. A process for real-time monitoring of deformation of smart elastic textiles based on measurements of electromagnetic characteristics performed with the apparatus according to any of the preceding claims, **characterized in that** the process comprises the following steps: storing a schematic 3D model of the smart textile, wherein its topology is defined by conductive fibres, while the intersections of the fibres represent measurement points (nodes) at which electromagnetic characteristics are measured, wherein a schematic model of the smart elastic textile is, in time t, defined by the set of vertices $V = \{v_i\}$ and the corresponding set of edges between them $E = \{e_{i,j}\}$, and wherein a vertex $v_i$ corresponds to a measuring point of a sensor mesh with an index i E [1,1], where edges $e_{i,j} = (v_i, v_j)$ correspond to the topology of conductive fibres bounded by a pairs of measuring vertices vi, vj $\in$ V, and storing data transformation coefficient,

a) aligning measurement points and the corresponding topology of the sensory network of the smart textile with a schematic 3D model stored in the memory of the apparatus,

b) measuring electromagnetic characteristics, such as electric current, conductivity, resistance, voltage, etc., in each of the measuring points,

c) transforming the measured electromagnetic characteristics into distances between measurement points, i.e. mapping,

d) optionally, calibration of mapping functions that transforms measured electromagnetic characteristic into distance between points, wherein calibration function may be defined experimentally or based on information provided by the smart textile manufacturer,

e) updating the position of the vertices of schematic 3D model of the smart textile, thus, reconstructing its deformation by solving a system of equations that transforms said distances into coordinates of the vertices of the 3D model,

f) iterative total reconstruction error minimisation to solve the system of equations obtained in previous step, achieved by adjusting the lengths of the edges by scaling it from a centre point between vertices of the schematic 3D model, thus, moving the vertices closer or further apart from centre point direction in a stepwise manner in order to mimic stretching or shrinking or bending of smart elastic textile, wherein the adjustment of the lengths of edges are such that the edge lengths are made equal to the distance between the corresponding measurement nodes,

g) stepwise reconstruction error minimisation achieved in each iteration by randomly selecting a starting edge of the schematic 3D model for length adjustment and then propagating the adjustments to its neighbours and the neighbours' neighbours until the lengths of all the edges are revised

h) calculation of the total reconstruction error as a root-mean-square error of the distances between vertices of the schematic 3D model and the corresponding distances between measuring points or, alternatively, using any other type of error assessment, as for example mean absolute error, mean absolute percentage error, or symmetric mean absolute percentage error, wherein this calculation is performed after every iteration,

i) checking the threshold in order to determine whether the total reconstruction error of the schematic 3D model is final or iterative calculation has to be continued, wherein the said threshold is given by the maximal allowed total reconstruction error or, alternatively, any other stopping criterion may be used, as for example number of iterative steps or maximal allowed time for iterative calculation, and

j) if the threshold has been reached, the solution of the system of equations defines coordinates of the 3D model of the smart textile after its deformation.

8. The process according to the preceding claim, **characterized in that** after step j) it comprises a further step:

k) visualization of the schematic 3D model of smart textile with any suitable software or hardware that allows rendering of 3D objects in boundary representation.

9. The process according to claim 7 or 8, **characterized in that** upon further deformation of the smart textile steps may be repeated and a real-time continuous representation of smart textile deformation is obtained.

10. The process according to any claim from 7 to 9, **characterized in that** the preferred threshold is the error, so that the step h) is carried out by a comparison of the reconstruction error $\varepsilon_k$ with the largest allowed error $\varepsilon_d$, wherein in case $\varepsilon_k$ is larger than $\varepsilon_d$, further iteration is performed, while in case $\varepsilon_k$ is smaller or equal to $\varepsilon_d$, reconstruction is finished, and the resulting vertex coordinates of schematic 3D model represent the result of the reconstruction.

11. The process according to any claim from 7 to 10, **characterized in that**

the schematic model of smart elastic textiles is, in time $t$, defined by the set of vertices $V = \{v_i\}$ and the corresponding set of edges between them $E = \{e_{i,j}\}$, wherein the vertex $v_i$ corresponds to the measuring point of the sensor mesh with the index $i \in [1, I]$, where edges $e_{i,j} = (v_i, v_j)$ correspond to the topology of conductive fibres bounded by a pair of measuring vertices $v_i$ in $v_j$,

wherein the physical distance between the measuring points and the corresponding vertices $v_i$ in $v_j$, i.e., length of the conductive fibre in the relaxed state, is denoted by $D_0(e_{i,j})$, while their initial positions are determined by the coordinates triple $\vec{C}_t(v_i)$, given as

$$\vec{C}_t(v_i) = [x_t(v_i), y_t(v_i), z_t(v_i)],$$

and wherein the electromagnetic characteristic of the conductive fibre that corresponds to the edge $e_{i,j}$, which change in time $t$ according to the applied deformation, is denoted by the property $P_t(e_{i,j})$, and

**in that** physical distances between the measuring points are estimated from the measurements of the electromagnetic characteristics of the conductive fibres, defined by a mapping function $m: \mathbb{R} \to \mathbb{R}$, that maps the input electromagnetic characteristic of the conductive fibre $P(e_{i,j})$ between the measuring points that correspond to $v_i$ and $v_j$ into the physical distance between them $D(e_{i,j})$, and wherein the defined mapping function $D_d(e_{i,j}) = m(E_d(e_{i,j}))$, allows for direct conversion of the measured electromagnetic characteristic $P_d(e_{i,j})$ into the lenght $D_d(e_{i,j})$ of the fibre $e_{i,j}$ between the measuring points $v_i$ and $v_j$ after any given deformation $d$,

wherein in step e) the initial positions of vertices correspondent the measuring points $\vec{C}_0(v_i)$ and $\vec{C}_0(v_j)$ and the measured distances between the them $D_d(e_{i,j})$ are used to estimate positions of the points $\vec{C}_d(v_i)$ and $\vec{C}_d(v_j)$ after the textile deformation $d$, thus generating the system of equations.

12. The process according to claim 11, **characterized in that** the solution of the system of equations is calculated iteratively, starting from the assumption that the conductive elastic fibres stretch or contract or bend, the points $p_i$ and $p_j$ can only come closer or move away from each other, wherein in $k$-ti iteration (where $k = 0$ denotes the initial state, $k = 1$ first iteration, $k + 1$ next iteration and $k = d$ the desired final state) of this iterative reconstruction process, a conductive fibre $e_{i,j} \in E$ is randomly selected, from which the propagation of changes in distances between points begins, so that a new position of vertices $\vec{C}_{k+1}(v_i)$ in $\vec{C}_{k+1}(v_j)$ is calculated as:

- If the new measured distance $D_d(e_{i,j})$ is greater than the actual measured distance between two points

$$\sqrt{\left(\vec{C}_k(v_i) - \vec{C}_k(v_j)\right)^2} :$$

$$\vec{C}_{k+1}(v_i) = \vec{C}_k(v_i) - \frac{\left|D_d(e_{i,j}) - \sqrt{\left(\vec{C}_k(v_i) - \vec{C}_k(v_j)\right)^2}\right|}{2},$$

$$\vec{C}_{k+1}(v_j) = \vec{C}_k(v_j) + \frac{\left|D_d(e_{i,j}) - \sqrt{\left(\vec{C}_k(v_i) - \vec{C}_k(v_j)\right)^2}\right|}{2}$$

- If the distance $D_d(e_{i,j})$ is smaller than the actual distance between two points $\sqrt{\left(\vec{C}_k(v_i) - \vec{C}_k(v_j)\right)^2}$ :

$$\vec{C}_{k+1}(v_i) = \vec{C}_k(v_i) + \frac{\left|D_d(e_{i,j}) - \sqrt{\left(\vec{C}_k(v_i) - \vec{C}_k(v_j)\right)^2}\right|}{2},$$

$$\vec{C}_{k+1}(v_j) = \vec{C}_k(v_j) - \frac{\left|D_d(e_{i,j}) - \sqrt{\left(\vec{C}_k(v_i) - \vec{C}_k(v_j)\right)^2}\right|}{2}$$

and using the above logic, propagation by updating the lengths of adjacent edges $\{e_{i,n}\}$ and $\{e_{j,m}\}$, where $e_{i,n}, e_{j,m} \in E$ is continued until all lengths of all edges in $E$ are updated, and
**in that** the reconstruction error $\varepsilon_k$ of the iteration $k$ is defined as:

$$\varepsilon_k = \sqrt{\frac{\sum_{i,j,i\neq j}^{N}\left(D_d(e_{i,j}) - \sqrt{\left(\vec{C}_k(v_i) - \vec{C}_k(v_j)\right)^2}\right)^2}{N}}$$

wherein the set $V = \{v_i\}$ and the corresponding coordinates $\overline{C}_d(v_i)$, where $v_i \in V$, together with the set of edges $E$, form a reconstructed 3D model of smart elastic textile after its deformation.

13. Use of the apparatus and the process according to any of the preceding claims in medical diagnostics and rehabilitation, in sport, in analysis of textile properties, as well as in entertainment industry, preferably in medicine for measurements of tensiomyography.

**Patentansprüche**

1. Vorrichtung und Verfahren zur Echtzeit-Überwachung der Verformung von intelligenten elastischen Textilien auf der Grundlage von Messungen elektromagnetischer Eigenschaften leitfähiger Fasern der elastischen Textilie, wobei ein schematisches Modell der intelligenten elastischen Textilie in der Zeit $t$ durch den Satz der Scheitelpunkte $V = \{v_i\}$ und dem entsprechenden Satz von Scheitelpunkten zwischen ihnen $E = \{e_{i,j}\}$ definiert wird, und wobei ein Scheitelpunkt $v_i$ einem Messpunkt eines Sensornetzes mit einem Index $i \in [1, l]$entspricht, wobei Kanten $e_{i,j} = (v_i, v_j)$ der Topologie leitfähiger Fasern entsprechen, die durch ein Paar von Messscheitelpunkten $v_i, v_j \in V$ begrenzt

werden, **dadurch gekennzeichnet, dass** die Vorrichtung Folgendes umfasst:

- mindestens eine geeignete Verbindung, die zum Verbinden der Vorrichtung mit Sensoren und/oder leitfähigen Fasern in der analysierten intelligenten Textilie angeordnet ist,
- ein geeigneter interner Speicher, vorzugsweise ein Direktzugriffsspeicher, zum Durchführen der folgenden Prozesse angeordnet ist:

o Speichern eines schematischen 3D-Modells der intelligenten Textilie, wobei seine Topologie durch leitfähige Fasern definiert wird, während die Schnittpunkte der Fasern Messpunkte (Knoten) darstellen, an denen elektromagnetische Eigenschaften gemessen werden, und
o Speichern des Datentransformationskoeffizienten,

- ein entsprechend programmierter Prozessor angeordnet ist, um mindestens die folgenden Schritte auszuführen:

o Ausrichten von Messpunkten und der entsprechenden Topologie des sensorischen Netzwerks der intelligenten Textilie mit dem schematischen 3D-Modell, das im Speicher der Vorrichtung gespeichert ist,
o Empfangen gemessener elektromagnetischer Eigenschaften von den Sensoren und/oder leitfähigen Fasern,
o Umwandeln der gemessenen elektromagnetischen Eigenschaften in Abstände zwischen Messpunkten, d. h. Kartieren,
o Aktualisieren der Position der Scheitelpunkte des schematischen 3D-Modells der intelligenten Textilie, und Wiederherstellen ihrer Verformung durch Lösen eines Gleichungssystems, das die Abstände in Koordinaten der Scheitelpunkte des 3D-Modells umwandelt,
o Iterative Gesamtwiederherstellungsfehlerminimierung zur Lösung des im vorherigen Schritt erhaltenen Gleichungssystems, erreicht durch Anpassen der Kantenlängen durch Skalieren von einem Mittelpunkt zwischen Scheitelpunkten des schematischen 3D-Modells, wodurch die Scheitelpunkte näher oder weiter von der Mittelpunktrichtung in schrittweiser Weise entfernt werden, um das Dehnen oder Schrumpfen oder Biegen intelligenter elastischer Textilien nachzuahmen, wobei die Anpassung der Kantenlängen so erfolgt, dass die Kantenlängen gleich dem Abstand zwischen den entsprechenden Messknoten sind,
o schrittweise Minimierung des Wiederherstellungsfehlers, der in jeder Iteration erreicht wird, indem zufällig eine Startkante des schematischen 3D-Modells zur Längenanpassung ausgewählt wird und die Anpassungen dann auf ihre Nachbarn und die Nachbarn der Nachbarn übertragen werden, bis die Längen aller Kanten überarbeitet sind
o Berechnung des gesamten Wiederherstellungsfehlers als quadratischer Mittelwert der Abstände zwischen Scheitelpunkten des schematischen 3D-Modells und der entsprechenden Abstände zwischen Messpunkten, oder alternativ unter Verwendung einer anderen Art der Fehlerbewertung, beispielsweise des mittleren absoluten Fehlers, des mittleren absoluten prozentualen Fehlers oder des symmetrischen mittleren absoluten prozentualen Fehlers, wobei diese Berechnung nach jeder Iteration durchgeführt wird,
o Überprüfen des Schwellenwerts, um zu bestimmen, ob der Gesamtwiederherstellungsfehler des schematischen 3D-Modells endgültig ist oder die iterative Berechnung fortgesetzt werden muss, wobei der Schwellenwert durch den maximal zulässigen Gesamtwiederherstellungsfehler gegeben ist oder alternativ durch ein beliebiges anderes Stoppkriterium verwendet werden kann, wie beispielsweise die Anzahl der iterativen Schritte oder die maximal zulässige Zeit für die iterative Berechnung, und
o wenn der Schwellenwert erreicht ist, definiert die Lösung des Gleichungssystems die Koordinaten des 3D-Modells der intelligenten Textilie nach ihrer Verformung.

**2.** Vorrichtung nach Anspruch 1, **dadurch gekennzeichnet, dass** der Prozessor ferner angeordnet ist, um die Visualisierung der Messergebnisse oder des verformten schematischen 3D-Textilmodells durchzuführen.

**3.** Vorrichtung nach Anspruch 1 oder Anspruch 2, **dadurch gekennzeichnet, dass** sie ferner ein geeignetes Display zum Anzeigen mindestens der gemessenen Ergebnisse oder eines 3D-Modells der Verformung der intelligenten Textilie umfasst.

**4.** Vorrichtung nach einem der vorstehenden Ansprüche, **dadurch gekennzeichnet, dass** die geeignete Verbindung über Konnektoren, Funk, Datenbank oder entsprechend gestaltete Anwendungsschnittstellen - APIs - gewährleistet ist.

**5.** Vorrichtung nach einem der vorstehenden Ansprüche, **dadurch gekennzeichnet, dass** die gemessenen elektromagnetischen Eigenschaften elektrischer Strom, Spannung oder Widerstand sind.

**6.** Vorrichtung nach einem der vorstehenden Ansprüche, **dadurch gekennzeichnet, dass** es sich um einen Computer handelt, der angeordnet ist, um die oben genannten Aufgaben durchzuführen, oder um eine dedizierte Vorrichtung, die unabhängig von der Programmiersprache oder den Prinzipien der maschinellen Implementierung ist.

**7.** Verfahren zur Echtzeitüberwachung der Verformung intelligenter elastischer Textilien auf der Grundlage von Messungen elektromagnetischer Eigenschaften, die mit der Vorrichtung nach einem der vorstehenden Ansprüche durchgeführt werden, **dadurch gekennzeichnet, dass** das Verfahren die folgenden Schritte umfasst: Speichern eines schematischen 3D-Modells der intelligenten Textilie, wobei seine Topologie durch leitfähige Fasern definiert wird, während die Schnittpunkte der Fasern Messpunkte (Knoten) darstellen, an denen elektromagnetische Eigenschaften gemessen werden, wobei ein schematisches Modell der intelligenten elastischen Textilie in der Zeit t durch den Satz von Scheitelpunkten $V_= \{v_i\}$ und den entsprechenden Satz von Kanten zwischen ihnen $E = \{e_{i,j}\}$ definiert wird, und wobei ein Scheitelpunkt $v_i$ einem Messpunkt eines Sensornetzes mit einem Index $i \in [1, I]$ entspricht, wobei Kanten $e_{i,j} = (v_i, v_j)$ der Topologie leitfähiger Fasern entsprechen, die durch ein Paar von Messscheitelpunkten $v_i, v_j \in V$ begrenzt werden, und wobei der Datentransformationskoeffizient gespeichert wird,

a) Ausrichten von Messpunkten und der entsprechenden Topologie des sensorischen Netzwerks der intelligenten Textilie mit einem schematischen 3D-Modell, das im Speicher der Vorrichtung gespeichert ist,
b) Messen elektromagnetischer Eigenschaften, wie elektrischem Strom, Leitfähigkeit, Widerstand, Spannung usw. an jedem der Messpunkte,
c) Umwandeln der gemessenen elektromagnetischen Eigenschaften in Abstände zwischen Messpunkten, d. h. Kartieren,
d) optional, Kalibrierung von Kartierungsfunktionen, welche die gemessenen elektromagnetischen Eigenschaften in Abstände zwischen Punkten umwandeln, wobei die Kalibrierungsfunktion experimentell oder auf der Grundlage von Informationen des Herstellers der intelligenten Textilie definiert werden kann,
e) Aktualisieren der Position der Scheitelpunkte des schematischen 3D-Modells der intelligenten Textilie, und Rekonstruieren seiner Verformung durch Lösen eines Gleichungssystems, das die Abstände in Koordinaten der Scheitelpunkte des 3D-Modells umwandelt,
f) Iterative Gesamtwiederherstellungsfehlerminimierung zur Lösung des im vorherigen Schritt erhaltenen Gleichungssystems, erreicht durch Anpassen der Kantenlängen durch Skalieren von einem Mittelpunkt zwischen Scheitelpunkten des schematischen 3D-Modells, wodurch die Scheitelpunkte näher oder weiter von der Mittelpunktrichtung in schrittweiser Weise entfernt werden, um das Dehnen oder Schrumpfen oder Biegen intelligenter elastischer Textilien nachzuahmen, wobei die Anpassung der Kantenlängen so erfolgt, dass die Kantenlängen gleich dem Abstand zwischen den entsprechenden Messknoten sind,
g) schrittweise Minimierung des Wiederherstellungsfehlers, der in jeder Iteration erreicht wird, indem zufällig eine Startkante des schematischen 3D-Modells zur Längenanpassung ausgewählt wird und die Anpassungen dann auf ihre Nachbarn und die Nachbarn der Nachbarn übertragen werden, bis die Längen aller Kanten überarbeitet sind
h) Berechnung des gesamten Wiederherstellungsfehlers als quadratischer Mittelwert der Abstände zwischen Scheitelpunkten des schematischen 3D-Modells und der entsprechenden Abstände zwischen Messpunkten, oder alternativ unter Verwendung einer anderen Art der Fehlerbewertung, beispielsweise des mittleren absoluten Fehlers, des mittleren absoluten prozentualen Fehlers oder des symmetrischen mittleren absoluten prozentualen Fehlers, wobei diese Berechnung nach jeder Iteration durchgeführt wird,
i) Überprüfen des Schwellenwerts, um zu bestimmen, ob der Gesamtwiederherstellungsfehler des schematischen 3D-Modells endgültig ist oder die iterative Berechnung fortgesetzt werden muss, wobei der Schwellenwert durch den maximal zulässigen Gesamtwiederherstellungsfehler gegeben ist oder alternativ durch ein beliebiges anderes Stoppkriterium verwendet werden kann, wie beispielsweise die Anzahl der iterativen Schritte oder die maximal zulässige Zeit für die iterative Berechnung, und
j) wenn der Schwellenwert erreicht ist, definiert die Lösung des Gleichungssystems die Koordinaten des 3D-Modells der intelligenten Textilie nach ihrer Verformung.

**8.** Verfahren nach dem vorstehenden Anspruch, **dadurch gekennzeichnet, dass** es nach Schritt j) einen weiteren Schritt umfasst:
k) Visualisierung des schematischen 3D-Modells intelligenter Textilien mit jeder geeigneten Software oder Hardware, welche das Rendern von 3D-Objekten in Grenzdarstellung zulässt.

9. Verfahren nach Anspruch 7 oder 8, **dadurch gekennzeichnet, dass** bei weiterer Verformung der intelligenten Textilie die Schritte wiederholt werden können und eine kontinuierliche Echtzeitdarstellung der Verformung der intelligenten Textilie erhalten wird.

10. Verfahren nach einem der Ansprüche 7 bis 9, **dadurch gekennzeichnet, dass** der bevorzugte Schwellenwert der Fehler ist, sodass der Schritt h) durch einen Vergleich des Wiederherstellungsfehlers $\varepsilon_k$ mit dem größten zulässigen Fehler $\varepsilon_d$ ausgeführt wird, wobei in dem Fall, dass $\varepsilon_k$ größer ist als $\varepsilon_d$, eine weitere Iteration durchgeführt wird, während in dem Fall, dass $\varepsilon_k$ kleiner als oder gleich $\varepsilon_d$ ist, die Wiederherstellung abgeschlossen ist und die resultierenden Scheitelpunktkoordinaten des schematischen 3D-Modells stellen das Ergebnis der Wiederherstellung dar.

11. Verfahren nach einem der Ansprüche 7 bis 10, **dadurch gekennzeichnet, dass**

das schematische Modell intelligenter elastischer Textilien in der Zeit $t$ durch den Satz der Scheitelpunkte $V = \{v_i\}$ und den entsprechenden Satz von Kanten $E = \{e_{i,j}\}$ zwischen ihnen definiert wird, wobei der Scheitelpunkt $v_i$ dem Messpunkt des Sensornetzes mit dem Index $i \in [1, I]$ entspricht, wobei Kanten $e_{i,j} = (v_i, v_j)$ der Topologie leitfähiger Fasern entsprechen, die durch ein Paar Messscheitelpunkte $v_i$ in $v_j$ begrenzt sind, wobei der physische Abstand zwischen den Messpunkten und den entsprechenden Scheitelpunkten $v_i$ in $v_j$, d. h. die Länge der leitfähigen Faser im entspannten Zustand, mit $D_0(e_{i,j})$ bezeichnet wird, während ihre Anfangspositionen durch das Koordinatentripel $\vec{C}_t(v_i)$ bestimmt werden, gegeben als

$$\vec{C}_t(v_i) = [x_t(v_i), y_t(v_i), z_t(v_i)],$$

und wobei die elektromagnetische Eigenschaft der leitfähigen Faser, die der Kante $e_{i,j}$ entspricht, die sich mit der Zeit t gemäß der angewendeten Verformung ändert, durch die Eigenschaft $P_t(e_{i,j})$ bezeichnet wird, und dadurch, dass physische Abstände zwischen den Messpunkten aus den Messungen der elektromagnetischen Eigenschaften der leitfähigen Fasern geschätzt werden, definiert durch eine Kartierungsfunktion $m: \mathbb{R} \to \mathbb{R}$, welche die eingegebenen elektromagnetischen Eigenschaften der leitfähigen Faser $P(e_{i,j})$ zwischen den Messpunkten kartiert, die $v_i$ und $v_j$ in den physischen Abstand zwischen ihnen $D(e_{i,j})$ entsprechen, und wobei die definierte Kartierungsfunktion $D_d(e_{i,j}) = m(E_d(e_{i,j}))$ eine direkte Umwandlung der gemessenen elektromagnetischen Eigenschaft $P_d(e_{i,j})$ in die Länge $D_d(e_{i,j})$ der Faser $e_{i,j}$ zwischen den Messpunkten $v_i$ und $v_j$ nach jeder gegebenen Verformung d zulässt, wobei in Schritt e) die Anfangspositionen der den Messpunkten entsprechenden Scheitelpunkte $\vec{C}_0(v_i)$ und $\vec{C}_0(v_j)$ und die gemessenen Abstände zwischen ihnen $D_d(e_{i,j})$ zum Schätzen der Positionen der Punkte $\vec{C}_d(v_i)$ und $\vec{C}_d(v_j)$ nach der Textilienverformung $d$ verwendet werden, wodurch das Gleichungssystem erzeugt wird.

12. Verfahren nach Anspruch 11, **dadurch gekennzeichnet, dass** die Lösung des Gleichungssystems iterativ berechnet wird, ausgehend von der Annahme, dass sich die leitfähigen elastischen Fasern dehnen oder zusammenziehen oder biegen, die Punkte $p_i$ und $p_j$ sich nur einander annähern oder voneinander entfernen können, wobei in $k$-ti Iteration (wobei $k = 0$ den Anfangszustand, $k = 1$ die erste Iteration, $k + 1$ die nächste Iteration und $k = d$ den gewünschten Endzustand bezeichnet) dieses iterativen Wiederherstellungsprozesses eine leitfähige Faser $e_{i,j} \in E$ zufällig ausgewählt wird, von der aus die Ausbreitung von Änderungen der Abstände zwischen Punkten beginnt, sodass eine neue Position der Scheitelpunkte $\vec{C}_{k+1}(v_i)$ in $\vec{C}_{k+1}(v_j)$ berechnet wird als:

- Wenn der neue gemessene Abstand $D_d(e_{i,j})$ größer ist als der tatsächlich gemessene Abstand zwischen zwei Punkten $\sqrt{\left(\vec{C}_k(v_i) - \vec{C}_k(v_j)\right)^2}$:

$$\vec{C}_{k+1}(v_i) = \vec{C}_k(v_i) - \frac{\left| D_d(e_{i,j}) - \sqrt{\left(\vec{C}_k(v_i) - \vec{C}_k(v_j)\right)^2} \right|}{2},$$

$$\vec{C}_{k+1}(v_j) = \vec{C}_k(v_j) + \frac{\left| D_d(e_{i,j}) - \sqrt{\left(\vec{C}_k(v_i) - \vec{C}_k(v_j)\right)^2} \right|}{2}$$

- Wenn der Abstand $D_d(e_{i,j})$ kleiner ist als der tatsächliche Abstand zwischen zwei Punkten $\sqrt{\left(\vec{C}_k(v_i) - \vec{C}_k(v_j)\right)^2}$ :

$$\vec{C}_{k+1}(v_i) = \vec{C}_k(v_i) + \frac{\left| D_d(e_{i,j}) - \sqrt{\left(\vec{C}_k(v_i) - \vec{C}_k(v_j)\right)^2} \right|}{2},$$

$$\vec{C}_{k+1}(v_j) = \vec{C}_k(v_j) - \frac{\left| D_d(e_{i,j}) - \sqrt{\left(\vec{C}_k(v_i) - \vec{C}_k(v_j)\right)^2} \right|}{2}$$

und unter Verwendung der obigen Logik wird die Ausbreitung durch Aktualisieren der Längen benachbarter Kanten $\{e_{i,n}\}$ und $\{e_{j,m}\}$ fortgesetzt, wobei $e_{i,n}$, $e_{j,m} \in E$ fortgesetzt wird, bis alle Längen aller Kanten in $E$ aktualisiert sind, und
dadurch, dass der Wiederherstellungsfehler $\varepsilon_k$ der Iteration $k$ definiert ist als:

$$\varepsilon_k = \sqrt{\frac{\sum_{i,j,i \neq j}^{N} \left( D_d(e_{i,j}) - \sqrt{\left(\vec{C}_k(v_i) - \vec{C}_k(v_j)\right)^2} \right)^2}{N}}$$

wobei der Satz $V = \{v_i\}$ und die entsprechenden Koordinaten $\overline{C}_d(v_i)$, wobei $v_i \in V$, zusammen mit dem Satz von Kanten $E$ nach ihrer Verformung ein rekonstruiertes 3D-Modell der intelligenten elastischen Textilie bilden.

13. Verwendung der Vorrichtung und des Verfahrens nach einem der vorstehenden Ansprüche in der medizinischen Diagnostik und Rehabilitation, im Sport, bei der Analyse textiler Eigenschaften sowie in der Unterhaltungsindustrie, vorzugsweise in der Medizin für Messungen der Tensiomyographie.

**Revendications**

1. Appareil et procédé pour la surveillance en temps réel de la déformation de textiles élastiques intelligents sur la base de mesures de caractéristiques électromagnétiques de fibres conductrices des textiles élastiques, où un modèle schématique du textile élastique intelligent est, à un moment $t$, défini par l'ensemble de sommets $V = \{v_i\}$ et l'ensemble correspondant d'arêtes entre ceux-ci $E = \{e_{i,j}\}$, et où un sommet $V_I$ correspond à un point de mesure d'un maillage de capteurs avec un indice $i \in [1, I]$, où les arêtes $e_{i,j} = (v_i, v_j)$ correspondent à la topologie des fibres conductrices bordées par des paires de sommets de mesure $v_i, v_j \in V$, **caractérisé par le fait que** l'appareil comprend :

- au moins une connexion appropriée, conçue pour raccorder l'appareil à des capteurs et/ou des fibres conductrices dans le textile intelligent analysé,
- une mémoire interne appropriée, de préférence une mémoire vive, conçue pour effectuer les processus suivants :

o le stockage d'un modèle schématique en 3D du textile intelligent, où sa topologie est définie par des fibres conductrices, tandis que les intersections des fibres représentent les points de mesure (noeuds) où les caractéristiques électromagnétiques sont mesurées, et
o le stockage du coefficient de transformation des données,

- un processeur programmé de façon adéquate et réglé pour réaliser au moins les étapes suivantes :

o l'alignement des points de mesure et la topologie correspondante du réseau de capteurs du textile intelligent avec le modèle schématique 3D stocké dans la mémoire de l'appareil,
o la réception des caractéristiques électromagnétiques mesurées provenant des capteurs et/ou des fibres conductrices,
o la transformation des caractéristiques électromagnétiques mesurées en distances entre les points de mesure, c.-à-d. la cartographie,
o l'actualisation de la position des sommets du modèle schématique 3D du textile intelligent, reconstruisant ainsi la déformation de ce dernier en résolvant un système d'équations qui transforme lesdites distances en coordonnées des sommets du modèle 3D,
o la minimisation des erreurs de reconstruction itérative totale pour résoudre le système d'équations obtenu lors de l'étape précédente, ce qui est rendu possible en ajustant les longueurs des arêtes en les mettant à l'échelle à partir d'un point central entre les sommets du modèle schématique 3D, rapprochant ou éloignant ainsi les sommets du point central d'une manière graduelle afin d'imiter l'étirement ou le rétrécissement ou le fléchissement du textile élastique intelligent, où l'ajustement des longueurs des arêtes est tel que les longueurs des arêtes sont rendues égales à la distance entre les noeuds de mesure correspondants,
o la minimisation des erreurs de reconstruction par étapes obtenue à chaque itération en sélectionnant au hasard une arête de départ sur le modèle schématique 3D pour l'ajustement des longueurs, puis en propageant les ajustements à ses voisines et aux voisines des voisines, jusqu'à ce que les longueurs de toutes les arêtes aient été actualisées,
o le calcul de l'erreur de reconstruction totale en tant qu'erreur quadratique moyenne des distances entre les sommets du modèle schématique 3D et des distances correspondantes entre les points de mesure ou, sinon, l'utilisation de tout autre type d'estimation d'erreur, comme par exemple l'erreur absolue moyenne, l'erreur absolue moyenne en pourcentage, ou l'erreur absolue moyenne symétrique en pourcentage, où ce calcul est effectué après chaque itération,
o le contrôle du seuil afin de déterminer si l'erreur de reconstruction totale du modèle schématique 3D est finale ou si le calcul itératif doit être poursuivi, où ledit seuil est donné par l'erreur de reconstruction totale autorisée maximale ou alors, tout autre critère d'arrêt peut être utilisé, comme par exemple le nombre d'étapes itératives ou le temps autorisé maximal pour le calcul itératif, et
o si le seuil a été atteint, la solution du système d'équations définit les coordonnées du modèle 3D du textile intelligent après sa déformation.

2. L'appareil selon la revendication 1, **caractérisé par le fait que** le processeur est en outre conçu pour permettre la visualisation des résultats mesurés ou du modèle textile schématique 3D déformé.

3. L'appareil selon la revendication 1 ou la revendication 2, **caractérisé par le fait qu'**il comprend en outre un affichage approprié pour afficher au moins les résultats mesurés ou le modèle 3D de la déformation du textile intelligent.

4. L'appareil selon l'une quelconque des revendications précédentes, **caractérisé par le fait que** la connexion appropriée est établie au moyen de connecteurs, d'un dispositif sans fil, d'une base de données, ou d'interfaces pour applications conçues de façon appropriée - des API.

5. L'appareil selon l'une quelconque des revendications qui précèdent, **caractérisé par le fait que** les caractéristiques électromagnétiques mesurées sont un courant, une tension ou une résistance électrique.

6. L'appareil selon l'une quelconque des revendications précédentes, **caractérisé par le fait qu'**il s'agit d'un ordinateur conçu pour effectuer les tâches mentionnées ci-dessus ou d'un dispositif dédié, qui est indépendant du langage de programmation ou des principes de la mise en oeuvre de la machine.

7. Un procédé pour la surveillance en temps réel de la déformation de textiles élastiques intelligents sur la base de mesures de caractéristiques électromagnétiques effectuées avec l'appareil selon l'une quelconque des revendications précédentes, **caractérisé par le fait que** le procédé comprend les étapes suivantes : le stockage d'un modèle schématique 3D du textile intelligent, où sa topologie est définie par des fibres conductrices, tandis que les intersections des fibres représentent des points de mesure (noeuds) où les caractéristiques électromagnétiques sont mesurées, procédé dans lequel un modèle schématique du textile élastique intelligent est, à un moment $t$, défini par l'ensemble des sommets V={$v_i$} et l'ensemble correspondant des arêtes entre ceux-ci $E$ = {$e_{i,j}$}, et où un sommet $v_i$ correspond à un point de mesure d'un maillage de capteurs avec un indice $i \in$ [1, $I$], où les arêtes $e_{i,j}$ = ($v_i$, $v_j$) correspondent à la topologie des fibres conductrices bordées par des paires de sommets de mesure $v_i, v_j \in V$, et le stockage du coefficient de transformation de données,

a) l'alignement des points de mesure et de la topologie correspondante du réseau de capteurs du textile intelligent avec un modèle schématique 3D stocké dans la mémoire de l'appareil,

b) la mesure de caractéristiques électromagnétiques, telles que courant électrique, conductivité, résistance, tension, etc., à chaque point de mesure,

c) la transformation des caractéristiques électromagnétiques mesurées en distances entre les points de mesure, c.-à-d. la cartographie,

d) facultativement, le calibrage de la fonction de cartographie qui transforme la caractéristique électromagnétique mesurée en distance entre les points, où la fonction de calibrage peut être définie expérimentalement ou être basée sur des informations fournies par le fabricant du textile intelligent,

e) l'actualisation de la position des sommets du modèle schématique 3D du textile intelligent, reconstruisant ainsi sa déformation en résolvant un système d'équations qui transforme lesdites distances en coordonnées des sommets du modèle 3D,

f) la minimisation des erreurs de reconstruction itérative totale pour résoudre le système d'équations obtenu lors de l'étape précédente, ce qui est rendu possible en ajustant les longueurs des arêtes en les mettant à l'échelle à partir d'un point central entre les sommets du modèle schématique 3D, rapprochant ou éloignant ainsi les sommets du point central d'une manière graduelle afin d'imiter l'étirement ou le rétrécissement ou le fléchissement du textile élastique intelligent, où l'ajustement des longueurs des arêtes est tel que les longueurs des arêtes sont rendues égales à la distance entre les noeuds de mesure correspondants,

g) la minimisation des erreurs de reconstruction par étapes obtenue à chaque itération en sélectionnant au hasard une arête de départ sur le modèle schématique 3D pour l'ajustement des longueurs, puis en propageant les ajustements à ses voisines et aux voisines des voisines, jusqu'à ce que les longueurs de toutes les arêtes aient été actualisées,

h) le calcul de l'erreur de reconstruction totale en tant qu'erreur quadratique moyenne des distances entre les sommets du modèle schématique 3D et des distances correspondantes entre les points de mesure ou, sinon, l'utilisation de tout autre type d'estimation d'erreur, comme par exemple l'erreur absolue moyenne, l'erreur absolue moyenne en pourcentage, ou l'erreur absolue moyenne symétrique en pourcentage, où ce calcul est effectué après chaque itération,

i) le contrôle du seuil afin de déterminer si l'erreur de reconstruction totale du modèle schématique 3D est finale ou si le calcul itératif doit être poursuivi, où ledit seuil est donné par l'erreur de reconstruction totale autorisée maximale ou alors, tout autre critère d'arrêt peut être utilisé, comme par exemple le nombre d'étapes itératives ou le temps autorisé maximal pour le calcul itératif, et

j) si le seuil a été atteint, la solution du système d'équations définit les coordonnées du modèle 3D du textile intelligent après sa déformation.

8. Le procédé selon la revendication précédente, **caractérisé en ce que** après l'étape j), il comprend une étape supplémentaire :

k) la visualisation du modèle schématique 3D du textile intelligent avec tout logiciel ou matériel informatique approprié qui permet un rendu d'objets en 3D de type modélisation surfacique B-Rep.

9. Le procédé selon la revendication 7 ou 8, **caractérisé par le fait que** lors d'une déformation supplémentaire du textile intelligent, les étapes peuvent être répétées et une représentation continue en temps réel de la déformation du textile intelligent est obtenue.

10. Le procédé selon l'une quelconque des revendications 7 à 9, **caractérisé par le fait que** le seuil privilégié est l'erreur, si bien que l'étape h) est effectuée par une comparaison de l'erreur de reconstruction $\varepsilon_k$ et de l'erreur autorisée la plus grande $\varepsilon_d$, où dans le cas où $\varepsilon_k$ est supérieur à $\varepsilon_d$, une itération supplémentaire est effectuée, tandis que dans le cas où $\varepsilon_k$ est inférieur ou égal à $\varepsilon_d$, la reconstruction est terminée, et les coordonnées des sommets obtenues du modèle schématique 3D représentent le résultat de la reconstruction.

11. Le procédé selon l'une quelconque des revendications 7 à 10, **caractérisé par le fait que**

le modèle schématique des textiles élastiques intelligents est, à un moment *t*, défini par l'ensemble de sommets $V = \{v_i\}$ et l'ensemble correspondant d'arêtes entre ceux-ci $E = \{e_{i,j}\}$, où le sommet $v_i$ correspond au point de mesure du maillage de capteurs avec l'indice $i \in [1, I]$, où les arêtes $e_{i,j} = (v_i, v_j)$ correspondent à la topologie de fibres conductrices bordées par une paire de sommets de mesure $v_i$ et $v_j$,

où la distance physique entre les points de mesure et les sommets correspondants $v_i$ et $v_j$, c.-à-d., la longueur de la fibre conductrice à l'état détendu, est indiquée par $D_0(e_{i,j})$, tandis que leurs positions initiales sont déterminées par le trio de coordonnées $\vec{C}_t(v_i)$, exprimées comme

$$\vec{C}_t(v_i) = [x_t(v_i), y_t(v_i), z_t(v_i)],$$

et où la caractéristique électromagnétique de la fibre conductrice qui correspond à l'arête $e_{j,j}$, qui change au moment t selon la déformation appliquée, est désignée par la propriété $P_t(e_{j,j})$, et

en ce que les distances physiques entre les points de mesure sont estimées à partir des mesures des caractéristiques électromagnétiques des fibres conductrices, définies par une fonction de cartographie $m: \mathbb{R} \to \mathbb{R}$, qui schématise la caractéristique électromagnétique saisie de la fibre conductrice $P(e_{i,j})$ entre les points de mesure qui correspondent à $v_i$ et $v_j$ en distance physique entre ceux-ci $D(e_{i,j})$, et où la fonction de cartographie définie $D_d(e_{i,j}) = m(E_d(e_{i,j}))$, permet la conversion directe de la caractéristique électromagnétique mesurée $P_d(e_{i,j})$ en longueur $D_d(e_{i,j})$ de la fibre $e_{i,j}$ entre les points de mesure $v_i$ et $v_j$ après toute déformation donnéed, où à l'étape e) les positions initiales des sommets correspondant aux points de mesure $\vec{C}_0(v_i)$ et $\vec{C}_0(v_j)$ et les distances mesurées entre ceux-ci $D_d(e_{i,j})$ sont utilisées pour estimer les positions des points $\vec{C}_d(v_i)$ et $\vec{C}_d(v_j)$ après la déformation du textile d, générant ainsi le système d'équations.

12. Le procédé selon la revendication 11, **caractérisé par le fait que** la solution du système d'équations est calculée de façon itérative, en se basant sur le postulat que les fibres élastiques conductrices s'étirent ou se contractent ou fléchissent, les points $p_i$ et $p_j$ ne peuvent que se rapprocher ou s'éloigner, où lors de l'itération *k*-ti (où $k = 0$ désigne l'état initial, $k = 1$ la première itération, $k +1$ l'itération suivante et $k = d$ l'état final désiré) de ce processus de reconstruction itérative, une fibre conductrice $e_{i,j} \in E$ est sélectionnée au hasard, à partir de laquelle la propagation des changements de distance entre les points commence, si bien qu'une nouvelle position des sommets $\vec{C}_{k+1}(v_i)$ et $\vec{C}_{k+1}(v_j)$ est calculée ainsi :

- Si la nouvelle distance mesurée $D_d(e_{i,j})$ est supérieure à la distance mesurée réelle entre deux points

$$\sqrt{\left(\vec{C}_k(v_i) - \vec{C}_k(v_j)\right)^2} :$$

$$\vec{C}_{k+1}(v_i) = \vec{C}_k(v_i) - \frac{\left| D_d(e_{i,j}) - \sqrt{\left(\vec{C}_k(v_i) - \vec{C}_k(v_j)\right)^2} \right|}{2},$$

$$\vec{C}_{k+1}(v_j) = \vec{C}_k(v_j) + \frac{\left| D_d(e_{i,j}) - \sqrt{\left(\vec{C}_k(v_i) - \vec{C}_k(v_j)\right)^2} \right|}{2}$$

- Si la distance $D_d(e_{i,j})$ est inférieure à la distance réelle entre deux points $\sqrt{\left(\vec{C}_k(v_i) - \vec{C}_k(v_j)\right)^2} :$

$$\vec{C}_{k+1}(v_i) = \vec{C}_k(v_i) + \frac{\left| D_d(e_{i,j}) - \sqrt{\left(\vec{C}_k(v_i) - \vec{C}_k(v_j)\right)^2} \right|}{2},$$

$$\vec{C}_{k+1}(v_j) = \vec{C}_k(v_j) - \frac{\left| D_d(e_{i,j}) - \sqrt{\left(\vec{C}_k(v_i) - \vec{C}_k(v_j)\right)^2} \right|}{2}$$

et en utilisant la logique ci-dessus, la propagation par l'actualisation des longueurs des arêtes adjacentes $\{e_{i,n}\}$ et $\{e_{j,m}\}$, où $e_{i,n}$, $e_{j,m} \in E$ est poursuivi jusqu'à ce que toutes les longueurs de toutes les arêtes dans E soient actualisées, et
en ce que l'erreur de reconstruction $\varepsilon_k$ de l'itération $k$ est définie comme :

$$\varepsilon_k = \sqrt{\frac{\sum_{i,j,i \neq j}^{N} \left( D_d(e_{i,j}) - \sqrt{\left(\vec{C}_k(v_i) - \vec{C}_k(v_j)\right)^2} \right)^2}{N}}$$

où l'ensemble $V = \{v_i\}$ et les coordonnées correspondantes $\vec{C}_d(v_i)$, où $v_i \in V$, conjointement avec l'ensemble d'arêtes E, forment un modèle 3D reconstruit du textile élastique intelligent après sa déformation.

13. L'utilisation de l'appareil et du procédé selon l'une quelconque des revendications précédentes dans les diagnostics et la rééducation médicaux, dans le sport, dans l'analyse des propriétés des textiles, ainsi que dans le monde du spectacle, de préférence en médecine pour les mesures de tensiomyographie.

Figure 1

Figure 2

Figure 3

Figure 4

Figure 5

Figure 6

Figure 7

Figure 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4715235 A
- WO 2009051411 A
- US 10119208 B
- US 10987052 B
- US 9271665 B
- US 10119208 B2
- US 20200163621 A

- US 10602965 B
- US 20150370320 A
- US 7365031 B
- US 20160262687 A
- US 20150148619 A
- EP 2595074 A
- US 20200166989 A

**Non-patent literature cited in the description**

- **AMMARI, H. et al.** *arXiv:1409.3650*
- **ROFOUEI et al.** Computing with uncertainty in a smart textile surface for object recognition. *2010 IEEE Conference on Multisensor Fusion and Integration,* 2010

- **PARZER et al.** SmartSleeve: Real-time Sensing of Surface and Deformation Gestures on Flexible, Interactive Textiles, using a Hybrid Gesture Detection Pipeline. *Proceedings of the 30th Annual ACM Symposium on User Interface Software and Technology (UIST '17).,* 2017
- **LIU, SU et al.** Smart E-textile: Resistance properties of conductive knitted fabric - Single pique. *Textile Research Journal,* 2016